# EUROPÄISCHE PATENTSCHRIFT

(11) **EP 1 757 491 B1**
(45) Veröffentlichungstag und Bekanntmachung des Hinweises auf die Patenterteilung: **07.05.2008**
(21) Anmeldenummer: 06017342.4
(22) Anmeldetag: 21.08.2006
(51) Int. Cl.: B60R 21/20

(54) **Fahrzeuglenkrad mit Gassackmodul**
Vehicle steering wheel with airbag module
Volant pour véhicule avec module de coussin gonflable

(30) Priorität: 24.08.2005 DE 202005013383 U
(43) Veröffentlichungstag der Anmeldung: 28.02.2007
(73) Patentinhaber: TRW Automotive Safety Systems GmbH, 63743 Aschaffenburg (DE)
(72) Erfinder: Frisch, Ralph, 63776 Mömbris (DE)
(74) Vertreter: Strass, Jürgen

(56) Entgegenhaltungen:
- DE-U1- 20 316 519
- GB-A- 2 390 337
- US-A- 5 755 458
- US-A1- 2004 217 580

## Beschreibung

Die Erfindung betrifft ein Fahrzeuglenkrad mit einem Gassackmodul gemäß dem Oberbegriff des Anspruchs 1.

Die Befestigung eines Gassackmoduls an einem Fahrzeuglenkrad ist aufgrund der hohen Anforderungen an die Positionierung des Gassackmoduls mit Schwierigkeiten verbunden. Eine ungenaue Positionierung des Gassackmoduls hat nicht nur unterschiedliche Spaltmaße zur Folge, sondern kann auch zu unerwünschten Geräuschen durch Lagerreibung oder Anschlagen des Gassackmoduls führen. Außerdem führt die Addition der Fertigungstoleranzen der beteiligten Bauteile (Toleranzkette) zu schwer beherrschbaren Spalten und Überständen. Dies betrifft besonders sogenannte Floating-Horn-Gassackmodule, die gegenüber benachbarten Bauteilen des Fahrzeuglenkrads beweglich sind. Bisher bekannte Lösungen zur Positionierung solcher Gassackmodule sind meist aufwendig und großbauend.

Aus der GB-A-2 390 337 ist ein Fahrzeuglenkrad mit den Merkmalen des Oberbegriffs des Anspruchs 1 bekannt. Das Gassackmodul dieses Lenkrads ist mittels einer Federclipanordnung lösbar am unteren Teil des Lenkradskeletts befestigt. Das Gassackmodul kann gegen die Vorspannkraft einer Druckfeder, die sich an einem Montageelement abstützt, auf und ab bewegt werden. Das Montageelement greift einerseits in eine Ausnehmung einer Lenkradspeiche und andererseits zwischen zwei Rasthaken ein, die sich von der Abdeckung des Gassackmoduls erstrecken.

In der US-A-5,755,458 ist ein Befestigungsmechanismus für ein Gassackmodul gezeigt, bei dem am Gassackmodul angebrachte Befestigungselemente in Eingriff mit U-förmigen Federclipteilen gebracht werden, die an der Lenkradnabe angebracht sind.

Die Erfindung schafft ein Fahrzeuglenkrad, bei dem das Gassackmodul leicht montierbar ist, dabei mit Hilfe weniger Bauteile automatisch richtig positioniert wird und Vibrationen vermieden werden.

Gemäß der Erfindung ist hierzu ein Fahrzeuglenkrad der eingangs genannten Art mit den kennzeichnenden Merkmalen des Anspruchs 1 vorgesehen. Das elastische Positionierelement drückt das Gassackmodul ohne weiteres Zutun in die gewünschte Position, so daß auch bei Floating-Hom-Gassackmodulen nach jeder Hupenbetätigung immer wieder eine korrekte Position erreicht wird. Somit bilden die klein ausführbaren Positionierelemente eine geräuschlose Führung für das Gassackmodul, das kleine, beherrschbare Spalte und Überstände ermöglicht. Das Positionierelement ist so ausgelegt, daß es eine Vorspannkraft auf das Gassackmodul in axialer Richtung des Fahrzeuglenkrads und in einer zur axialen Richtung des Fahrzeuglenkrads senkrechten Richtung ausübt, so daß mit dem erfindungsgemäßen Positionierelement neben der räumlichen Positionierung auch für eine Betätigungskraft und eine Rückstellkraft bei der Hupenbetätigung gesorgt ist und Vibrationen des Gassackmoduls vermieden werden. Die Positionierelemente sind austauschbar und können für unterschiedliche Anforderungen ausgelegt werden.

Das Positionierelement kann in vorteilhafter Weise für die Herstellung eines Hupenkontakts zur Hupenauslösung genutzt werden, indem das Positionierelement auf ein Hupenkontaktelement einwirkt.

Gemäß einer bevorzugten Ausführungsform der Erfindung ist das Positionierelement ein Federelement mit einem Abstützabschnitt und einem Rastabschnitt, wobei der Abstützabschnitt ein U-förmiges Profil mit zwei Schenkeln aufweist und der Rastabschnitt mit einem der Schenkel verbunden ist. Bei dieser Ausgestaltung des Positionierelements kann gemäß einer günstigen Anordnung der Rastabschnitt am Gassackmodul angreifen und der Abstützabschnitt zwischen dem benachbarten Bauteil und einem Träger angeordnet sein.

Eine korrekte Positionierung des Gassackmoduls in allen zur Lenkradachse senkrechten Richtungen läßt sich am einfachsten durch wenigstens drei über den Umfang des Gassackmoduls verteilte Positionierelemente erreichen.

Weitere Merkmale und Vorteile der Erfindung ergeben sich aus der nachfolgenden Beschreibung eines Ausführungsbeispiels und aus den beigefügten Zeichnungen, auf die Bezug genommen wird. In den Zeichnungen zeigen:
- Figur 1 eine Draufsicht auf ein erfindungsgemäßes Fahrzeuglenkrad;
- Figur 2 eine perspektivische Ansicht eines Positionierelements; und
- Figur 3 einen Schnitt durch einen Teil des Fahrzeuglenkrads aus Figur 1.

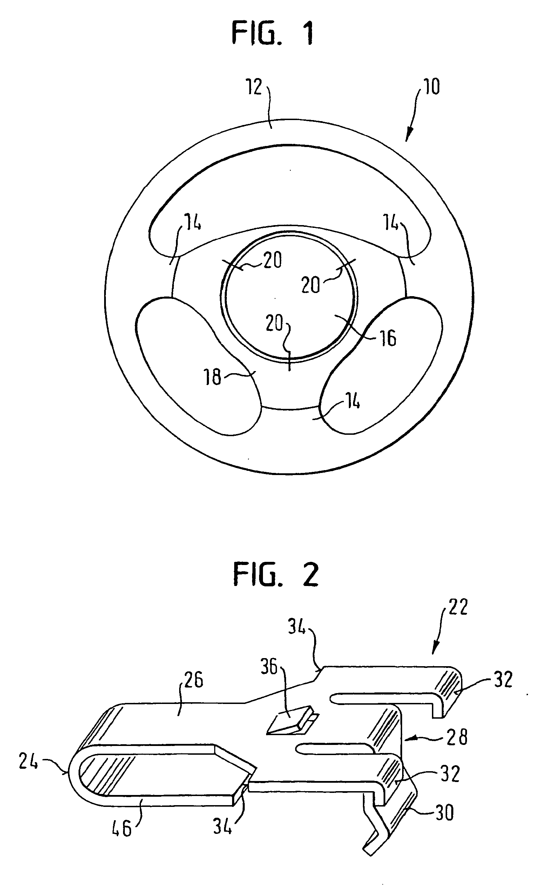

In Figur 1 ist ein Fahrzeuglenkrad 10 mit einem Lenkradkranz 12, Speichen 14 und einem zentral angeordneten Gassackmodul 16 dargestellt. Das Gassackmodul 16 ist als sogenanntes Floating-Horn-Gassackmodul ausgebildet, d.h. zur Betätigung der Hupe kann das gesamte Gassackmodul in axialer Richtung des Fahrzeuglenkrads 10 niedergedrückt werden. Das Gassackmodul 16 ist von einer Blende 18 umgeben, die unbeweglich am Fahrzeuglenkrad 10 befestigt ist.

An drei Stellen 20 sind spezielle elastische Positionierelemente 22 zur Positionierung und Führung des Gassackmoduls 16 relativ zu den unbeweglichen Bauteilen des Fahrzeuglenkrads 10, insbesondere zur benachbarten Blende 18, vorgesehen. Die Positionierelemente 22 sind im wesentlichen im gleichen Winkelabstand voneinander am Außenumfang des Gassackmoduls 16 angeordnet.

Figur 2 zeigt ein einzelnes Positionierelement 22. Das Positionierelement 22 ist ein Federelement und weist einen Abstützabschnitt 24 mit U-förmigem Profil auf. An den oberen Schenkel 26 des U-förmigen Profils schließt sich ein Rastabschnitt 28 mit einer abgewinkelten Zunge 30 an. Das Positionierelement 22 weist ferner erste Anlageabschnitte 32 und entgegengesetzte zweite Anlageabschnitte 34 sowie eine nach oben gebogene Nase 36 auf.

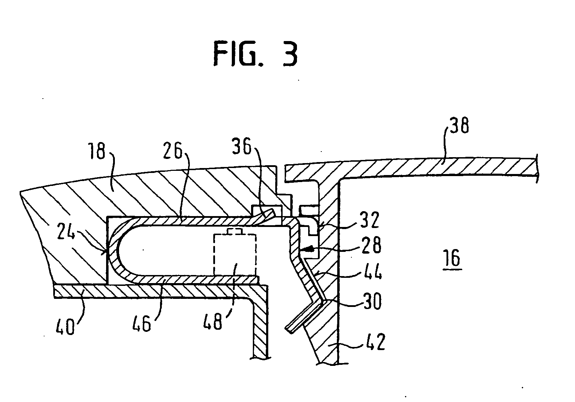

In Figur 3 ist das Fahrzeuglenkrad 10 im montierten Zustand dargestellt, in dem sich die Blende 18 und die Abdeckkappe 38 des Gassackmoduls 16 gegenüberliegen. Mittels eines von den Positionierelementen 22 unabhängigen primären Befestigungsmechanismus (nicht gezeigt), insbesondere eines Rastmechanismus, ist das Gassackmodul 16 so am Fahrzeuglenkrad 10 befestigt, daß im Falle einer Aktivierung des Gassackmoduls 16 die Schußkräfte über diese primäre Anbindung auf das Fahrzeuglenkrad 10 übertragen werden. Die Positionierelemente 22 dienen dagegen der räumlichen Positionierung und Führung des Gassackmoduls 16.

Wie in Figur 3 gezeigt, sind die Positionierelemente 22 so angeordnet, daß der Abstützabschnitt 24 in einem Ausschnitt der Blende 18 aufgenommen ist und sich auf einem Träger 40 abstützt. Die Nase 36 greift in einen passenden Ausschnitt der Blende 18, während sich die ersten Anlageabschnitte 32 an einer Seitenwand 42 der Abdeckkappe 38 und die zweiten Anlageabschnitte 34 an der Blende 18 abstützen. Auf diese Weise ist für eine kraftschlüssige Fixierung des Gassackmoduls 16 in einer zur Lenkradachse senkrechten Ebene gesorgt.

Der Rastabschnitt 28 des Positionierelements 22 mit der abgewinkelten Zunge 30 und die Kontur 44 der Seitenwand 42 der Abdeckkappe 38 sind so aufeinander abgestimmt, daß die Abdeckkappe 38 durch axiales Einschieben mit dem Positionierelement 22 verrastet (Sekundärverrastung). Die form- bzw. kraftschlüssige axiale Fixierung durch die Sekundärverrastung ist so ausgelegt, daß ein wiederholter Ein- und Ausbau der Abdeckkappe 38 möglich ist. Die freie Zunge 30 des Rastabschnitts 28 ist im montierten Zustand vorgespannt, d.h. sie übt eine Kraft auf die Abdeckkappe 38 und damit auf das Gassackmodul 16 aus, die eine Komponente in axialer Richtung und eine Komponente in einer dazu senkrechten Richtung aufweist.

Bei Verwendung mehrerer Positionierelemente 22 ergibt sich dadurch insgesamt eine definierte Positionierung des Gassackmoduls 16 relativ zur benachbarten Blende 18 unter einer Vorspannung, die Vibrationen des beweglichen Gassackmoduls entgegenwirkt. Auf ansonsten übliche Druckfedern oder dergleichen zur Vibrationsdämpfung kann somit verzichtet werden.

Wird das Gassackmodul 16 zur Hupenbetätigung in axialer Richtung niedergedrückt, bewegt sich das Positionierelement 22 mit Ausnahme des unteren Schenkels 46 praktisch ohne Reibung mit. Die Anlageabschnitte 32, 34 und der Rastabschnitt 28 sörgen für eine Führung und eine Betätigungs- bzw. Rückstellkraft, um der Bewegung des Gassackmoduls 16 einen gewissen Widerstand entgegenzusetzen und um das Gassackmodul 16 wieder zurück in die Ausgangsstellung zu bewegen.

Die Auslösung der Hupe kann mit Hilfe eines Hupenkontaktelements 48 erfolgen, das auf dem unteren Schenkel 46 des Positionierelements 22, auf dem Träger 40 oder auf einem anderen Bauteil unterhalb der Blende 18 angeordnet ist, wie in Figur 3 gestrichelt dargestellt. Durch das Niederdrücken des Gassackmoduls 16 wird der obere Schenkel 26 des Positionierelements 22 auf das Hupenkontaktelement 48 bewegt und stellt dadurch einen elektrischen Kontakt zur Auslösung der Hupe her.

Die Positionierelemente 22 erfüllen somit mehrere Funktionen: Die kraftschlüssige räumliche Fixierung des Gassackmoduls 16, die Vorspannung des Gassackmoduls 16 zur Vibrationsvermeidung, die Führung des Gassackmoduls 16 bei Hupenbetätigung sowie die Festlegung der Betätigungskraft und die Bereitstellung der Rückstellungskraft bei Hupenbetätigung.

## Patentansprüche

1. Fahrzeuglenkrad mit einem Gassackmodul (16), einem dem Gassackmodul (16) benachbarten, unbeweglich befestigten Bauteil (18), insbesondere einer Blende, einem primären Befestigungsmechanismus zur Befestigung des Gassackmoduls (16) und einem separaten elastischen Positionierelement (22), das die Lage des Gassackmoduls (16) unabhängig vom primären Befestigungsmechanismus relativ zu dem benachbarten Bauteil festlegt, **dadurch gekennzeichnet, daß** das Positionierelement (22) einteilig ausgeführt und so ausgelegt ist, daß es eine Vorspannkraft auf das Gassackmodul (16) sowohl in axialer Richtung des Fahrzeuglenkrads (10) als auch in einer zur axialen Richtung des Fahrzeuglenkrads (10) senkrechten Richtung ausübt.

2. Fahrzeuglenkrad nach Anspruch 1, **dadurch gekennzeichnet, daß** das Gassackmodul (16) ein Floating-Horn-Gassackmodul ist.

3. Fahrzeuglenkrad nach Anspruch 1 oder 2, **dadurch gekennzeichnet, daß** das Positionierelement (22) auf ein Hupenkontaktelement (48) einwirkt.

4. Fahrzeuglenkrad nach einem der vorhergehenden Ansprüche, **dadurch gekennzeichnet, daß** das Positionierelement (22) ein Federelement mit einem Abstützabschnitt (24) und einem Rastabschnitt (28) ist, wobei der Abstützabschnitt (24) ein U-förmiges Profil mit zwei Schenkeln (26, 46) aufweist und der Rastabschnitt (28) mit einem der Schenkel (26) verbunden ist.

5. Fahrzeuglenkrad nach Anspruch 4, **dadurch gekennzeichnet, daß** sich die Schenkel (26, 46) quer zur axialen Richtung des Fahrzeuglenkrads (10) erstrecken.

6. Fahrzeuglenkrad nach Anspruch 4 oder 5, **dadurch gekennzeichnet, daß** der Rastabschnitt (28) am Gassackmodul (16) angreift und der Abstützabschnitt (24) zwischen dem benachbarten Bauteil (18) und einem Träger (40) angeordnet ist.

7. Fahrzeuglenkrad nach einem der vorhergehenden Ansprüche, **dadurch gekennzeichnet, daß** das Positionierelement (22) erste Anlageabschnitte (32) aufweist, über die sich das Positionierelement (22) am Gassackmodul (16) abstützt.

8. Fahrzeuglenkrad nach einem der vorhergehenden Ansprüche, **dadurch gekennzeichnet, daß** das Positionierelement (22) zweite Anlageabschnitte (34) aufweist, über die sich das Positionierelement (22) am benachbarten Bauteil (18) abstützt.

9. Fahrzeuglenkrad nach einem der vorhergehenden Ansprüche, **dadurch gekennzeichnet, daß** wenigstens drei über den Umfang des Gassackmoduls (16) verteilte Positionierelemente (22) vorgesehen sind.

## Claims

1. A vehicle steering wheel comprising a gas bag module (16), an immovably fastened component (18), in particular a shield, adjacent to the gas bag module (16), a primary fastening mechanism for fastening the gas bag module (16), and a separate elastic positioning element (22) which establishes the position of the gas bag module (16) relative to the adjacent component independently of the primary fastening mechanism, **characterized in that** the positioning element (22) is made in one piece and is designed such that it exerts a pre-stressing force onto the gas bag module (16) both in the axial direction of the vehicle steering wheel (10) and in a direction perpendicular to the axial direction of the vehicle steering wheel (10).

2. The vehicle steering wheel according to claim 1, **characterized in that** the gas bag module (16) is a floating-horn gas bag module.

3. The vehicle steering wheel according to claim 1 or 2, **characterized in that** the positioning element (22) acts on a horn contact element (48).

4. The vehicle steering wheel according to any of the preceding claims, **characterized in that** the positioning element (22) is a spring element having a support section (24) and a detent section (28), the support section (24) having a U-shaped section with two arms (26, 46) and the detent section (28) being connected with one of the arms (26).

5. The vehicle steering wheel according to claim 4, **characterized in that** the arms (26, 46) extend transversely to the axial direction of the vehicle steering wheel (10).

6. The vehicle steering wheel according to claim 4 or 5, **characterized in that** the detent section (28) engages the gas bag module (16) and the support section (24) is arranged between the adjacent component (18) and a support (40).

7. The vehicle steering wheel according to any of the preceding claims, **characterized in that** the positioning element (22) has first contact sections (32) via which the positioning element (22) rests against the gas bag module (16).

8. The vehicle steering wheel according to any of the preceding claims, **characterized in that** the positioning element (22) has second contact sections (34) via which the positioning element (22) rests against the adjacent component (18).

9. The vehicle steering wheel according to any of the preceding claims, **characterized in that** at least three positioning elements (22) are provided which are distributed over the periphery of the gas bag module (16).

## Revendications

1. Volant de direction de véhicule, comportant un module de coussin à gaz (16), un composant (18), en particulier un panneau, voisin du module de coussin à gaz (16) et fixé de manière immobile, un mécanisme de fixation primaire pour fixer le module de coussin à gaz (16) et un élément de positionnement (22) élastique séparé qui détermine la position du module de coussin à gaz (16) par rapport au composant voisin indépendamment du mécanisme de fixation primaire, **caractérisé en ce que** l'élément de positionnement (22) est réalisé d'un seul tenant et conçu de telle sorte qu'il exerce une force de précontrainte sur le module de coussin à gaz (16) tant en direction axiale du volant de direction (10) de véhicule que dans une direction perpendiculaire à la direction axiale du volant de direction (10) de véhicule.

2. Volant de direction de véhicule selon la revendication 1, **caractérisé en ce que** le module de coussin à gaz (16) est un module de coussin à gaz à module de klaxon à montage flottant.

3. Volant de direction de véhicule selon la revendication 1 ou 2, **caractérisé en ce que** l'élément de positionnement (22) agit sur un élément de contact de klaxon (48).

4. Volant de direction de véhicule selon l'une des revendications précédentes, **caractérisé en ce que** l'élément de positionnement (22) est un élément à effet de ressort avec un tronçon de soutien (24) et un tronçon d'enclenchement (28), le tronçon de soutien (24) présentant un profil en forme de U avec deux branches (26, 46), et le tronçon d'enclenchement (28) étant relié à une branche (26).

5. Volant de direction de véhicule selon la revendication 4, **caractérisé en ce que** les branches (26, 46) s'étendent transversalement à la direction axiale du volant de direction (10) de véhicule.

6. Volant de direction de véhicule selon la revendication 4 ou 5, **caractérisé en ce que** le tronçon d'enclenchement (28) s'engage sur le module de coussin à gaz (16) et le tronçon de soutien (24) est agencé entre le composant (18) voisin et un support (40).

7. Volant de direction de véhicule selon l'une des revendications précédentes, **caractérisé en ce que** l'élément de positionnement (22) présente des premiers tronçons d'appui (32) via lesquels l'élément de positionnement (22) prend appui sur le module de coussin à gaz (16).

8. Volant de direction de véhicule selon l'une des revendications précédentes, **caractérisé en ce que** l'élément de positionnement (22) présente des seconds tronçons d'appui (34) via lesquels l'élément de positionnement (22) prend appui sur le composant voisin (18).

9. Volant de direction de véhicule selon l'une des revendications précédentes, **caractérisé en ce qu'**au moins trois éléments de positionnement (22) sont prévus répartis sur la périphérie du module de coussin à gaz (16).
